# FASCICULE DE BREVET EUROPEEN

(11) **EP 3 164 453 B1**
(45) Date de publication et mention de la délivrance du brevet: **18.09.2019**
(21) Numéro de dépôt: 15731913.8
(22) Date de dépôt: 25.06.2015
(51) Int. Cl.: C08L 33/06

(54) **COMPOSITION DE CAOUTCHOUC COMPRENANT UN ÉLASTOMÈRE CONTENANT DES UNITÉS MÉTHACRYLATES**
KAUTSCHUKZUSAMMENSETZUNG MIT EINEM ELASTOMER MIT METHACRYLATEINHEITEN
RUBBER COMPOSITION COMPRISING AN ELASTOMER CONTAINING METHACRYLATE UNITS

(30) Priorité: 01.07.2014 FR 1456241
(43) Date de publication de la demande: 10.05.2017
(73) Titulaire: Compagnie Générale des Etablissements Michelin, 63000 Clermont-Ferrand (FR)
(72) Inventeur: COSTE, Nathalie, F-63040 Clermont-Ferrand Cedex 9 (FR); SCHACH, Régis, F-63040 Clermont-Ferrand Cedex 9 (FR); MATMOUR, Rachid, F-63040 Clermont-Ferrand Cedex 9 (FR)
(74) Mandataire: Gandon-Pain, Sylvie
(86) Numéro de dépôt international: PCT/EP2015/064361
(87) Numéro de publication internationale: WO 2016/001052

(56) Documents cités:
- EP-A1- 1 535 960
- US-A1- 2005 016 651

## Description

Le domaine de la présente invention est celui des compositions de caoutchouc renforcées par une charge renforçante, notamment utilisées dans la confection de pneumatiques pour véhicules.

Une des exigences requises pour un pneumatique est d'assurer une adhérence optimale sur route, notamment sur sol mouillé. Une façon de conférer au pneumatique une adhérence élevée sur sol mouillé est d'utiliser une composition de caoutchouc dans sa bande de roulement, laquelle composition présente un large potentiel hystérétique.

Mais en même temps la bande de roulement de pneumatique doit aussi minimiser sa contribution à la résistance au roulement du pneumatique, c'est à dire être la moins hystérétique possible. Ainsi la composition de caoutchouc de la bande de roulement doit-elle satisfaire à deux exigences antinomiques, à savoir présenter un potentiel d'hystérèse maximal pour satisfaire à l'exigence d'adhérence et présenter une hystérèse aussi faible que possible pour satisfaire à l'exigence de résistance au roulement.

Satisfaire à la fois à l'exigence d'adhérence, notamment sur sol mouillé, et de résistance au roulement reste une préoccupation constante des manufacturiers de pneumatiques.

Pour réduire la résistance au roulement d'une bande de roulement de pneumatique, il a été proposé d'introduire dans la composition de caoutchouc constitutive de la bande de roulement des élastomères comprenant des unités monomères d'ester méthacrylique portant une fonction interactive avec la silice telle qu'une fonction alcool. Les taux massiques des unités monomères de l'ester de l'acide méthacrylique dans l'élastomère sont généralement inférieurs à 20% de la masse de l'élastomère, ce qui représente une teneur molaire des unités monomères de l'ester de l'acide méthacrylique très inférieure à 20% compte-tenu des masses molaires respectives des unités monomères constitutives de l'élastomère. On peut par exemple se référer à la publication de la demande de brevet EP 1308 318.

WO 2011/086119 décrit une composition de caoutchouc utilisable pour constituer une bande de roulement pour des pneumatiques a base résistance au roulement et bonne adhérence sur sol sec et mouillé qui comprend un élastomère thermoplastique polaire comprenant au moins un bloc élastomère et un bloc thermoplastique polaire choisi parmi les homopolymères et copolymères d'un ester de l'acide méthacrylique.

Les Demanderesses ont découvert lors de leurs recherches que l'introduction de certains élastomères comprenant des unités monomères d'ester d'acide méthacrylique dans une composition de caoutchouc constitutive d'une bande de roulement de pneumatique permet d'améliorer significativement la performance d'adhérence sur sol mouillé.

Ainsi un premier objet de l'invention est une composition de caoutchouc à base d'une charge renforçante, d'un système de réticulation, d'une matrice élastomère qui est réactive vis-à-vis du système de réticulation, laquelle matrice élastomère comprend un élastomère A comprenant des unités monomères d'un premier ester de l'acide méthacrylique qui représentent au moins 20% en mole des unités monomères de l'élastomère A, à condition que si l'élastomère A est un polymère de plusieurs monomères, l'élastomère A est un copolymère statistique.

Un autre objet de l'invention est un produit semi-fini en caoutchouc, notamment une bande de roulement, comprenant une composition de caoutchouc conforme à l'invention.

L'invention a également pour objet un pneumatique comprenant un produit semi-fini en caoutchouc, préférentiellement une bande de roulement, qui soit conforme à l'invention. Un tel pneumatique présente une adhérence sur sol mouillé améliorée.

L'invention concerne aussi un procédé pour fabriquer la composition de caoutchouc conforme à l'invention.

L'invention concerne également un procédé pour fabriquer le pneumatique conforme à l'invention.

### I. DESCRIPTION DETAILLEE DE L'INVENTION :

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Tous les pourcentages sont des pourcentages massiques sauf indication contraire.

L'abréviation "pce" signifie parties en poids pour cent parties d'élastomères présents dans la matrice élastomère.

On entend par matrice élastomère l'ensemble des élastomères présents dans la composition de caoutchouc.

L'élastomère A qui forme tout ou partie de la matrice élastomère a pour caractéristique essentielle de comprendre des unités monomères d'un (un ou plusieurs) premier ester de l'acide méthacrylique qui représentent au moins 20% en mole des unités monomères de l'élastomère A, de préférence au moins 30% en mole des unités monomères de l'élastomère A, de manière plus préférentielle au moins 50% en mole des unités monomères de l'élastomère A.

Ces plages préférentielles peuvent s'appliquer à l'un quelconque des modes de réalisation de l'invention.
Selon un mode de réalisation de l'invention, le premier ester de l'acide méthacrylique est un composé aliphatique.

Selon un mode de réalisation particulier de l'invention, le premier ester de l'acide méthacrylique est différent d'un ester de l'acide méthacrylique comportant une ou plusieurs fonctions époxydes. Ce mode de réalisation particulier implique que l'élastomère A peut contenir des unités monomères d'un ester de l'acide méthacrylique comportant une ou plusieurs fonctions époxydes à condition de contenir aussi des unités monomères d'un autre ester de l'acide méthacrylique, en l'espèce le premier ester de l'acide méthacrylique, dans des taux molaires conformes à l'invention.

Selon un mode de réalisation préférentiel de l'invention, le premier ester de l'acide méthacrylique répond à la formule (I) où Z est une chaîne carbonée comportant au moins 2 atomes de carbone, éventuellement substituée et éventuellement interrompue par un ou plusieurs hétéroatomes. Lorsque la chaine carbonée Z comporte au moins 2 atomes de carbone, le gain en adhérence mouillé est encore meilleur. De manière plus préférentielle, la chaîne carbonée Z comporte 2 à 20 atomes de carbone. De manière encore plus préférentielle, la chaîne carbonée Z est une chaine hydrocarbonée, c'est-à-dire constituée exclusivement d'atomes de carbone et d'hydrogène.

CH₂=C(CH₃)-COO-Z (I)

Très avantageusement, Z est un radical alkyle. Mieux, le premier ester de l'acide méthacrylique répond à la formule choisie dans le groupe constitué par les formules (Ia), (Ib), (Ic) et (Id) :

CH₂=C(CH₃)-COO-Z(a) (Ia)

CH₂=C(CH₃)-COO-Z(b) (Ib)

CH₂=C(CH₃)-COO-Z(c) (Ic)

CH₂=C(CH₃)-COO-Z(d) (Id)

où :
Z(a) est le radical 2-éthylhexyle,
Z(b) est le radical n-octyle
Z(c) est le radical isodécyle
Z(d) est le radical n-tridécyle.

Les formules (Ia), (Ib), (Ic) et (Id) du premier ester de l'acide méthacrylique peuvent s'appliquer à l'un quelconque des modes de réalisation de l'invention.

Dès lors que l'élastomère A est un polymère de plusieurs monomères, l'élastomère A est un copolymère statistique. Par exemple, lorsque l'élastomère A comprend des unités monomères n-octyle méthacrylate et 2-éthylhexyle méthacrylate , les unités monomères sont réparties de façon statistique dans la chaîne polymère.

Selon un mode de réalisation de l'invention, l'élastomère A est un élastomère obtenu par polymérisation radicalaire, en particulier en masse, en solution ou en milieu dispersé, notamment en émulsion, dispersion ou suspension. La polymérisation radicalaire, notamment en masse, en solution ou en milieu dispersé est un procédé bien connu de l'homme du métier de la synthèse de polymères. Le choix de l'un ou l'autre de ces trois procédés peut être guidé par exemple par la réactivité des monomères à polymériser, la cinétique de polymérisation ou l'exothermie de la réaction de polymérisation. Pour le choix du procédé de polymérisation, on peut par exemple se référer aux publications suivantes qui sont Macromolecules, 1998, 31, 2822-2827 ; Macromolecules, 2006, 39, 923-930) ; J. Am. Chem. Soc. 1951, 73, 5736. Ce mode de réalisation peut s'appliquer à l'un quelconque des modes de réalisation de l'invention.

La matrice élastomère est réactive vis-à-vis du système de réticulation. Cette caractéristique essentielle signifie que la matrice élastomère présente des sites réactifs vis-à-vis du système de réticulation. Autrement dit, la matrice élastomère comprend au moins un élastomère qui présente des sites réactifs vis-à-vis du système de réticulation.

Selon un mode de réalisation de l'invention, les sites réactifs de la matrice élastomère vis-à-vis du système de réticulation sont susceptibles de réagir avec le système de réticulation en formant des liaisons covalentes. Ce mode de réalisation peut s'appliquer à l'un quelconque des modes de réalisation de l'invention.

Selon un mode de réalisation de l'invention, la matrice élastomère comporte des unités monomères qui sont réactives vis-à-vis du système de réticulation. Autrement dit les sites réactifs de la matrice élastomère sont des unités monomères de la matrice élastomère. Selon ce mode de réalisation, la matrice élastomère réagit avec le système de réticulation par l'intermédiaire d'unités monomères présentes dans au moins un des élastomères de la matrice élastomère et réactives vis-à-vis du système de réticulation. L'élastomère dont les unités monomères sont réactives vis-à-vis du système de réticulation peut être l'élastomère A. Dans le cas où l'élastomère A ne présente pas d'unités monomères réactives vis-à-vis du système de réticulation, la matrice élastomère comprend un deuxième élastomère B qui présente des unités monomères réactives vis-à-vis du système de réticulation.

Selon un mode de réalisation de l'invention, le taux d'élastomère A dans la matrice élastomère est d'au moins 20 pce, préférentiellement d'au moins 40 pce, plus préférentiellement d'au moins 50 pce. Ce mode de réalisation, sous ses formes préférentielles ou non, peut s'appliquer à l'un quelconque des modes de réalisation de l'invention.

Selon une première variante de l'invention, la matrice élastomère comprend un (un ou plusieurs) deuxième élastomère, élastomère B, qui comprend des unités monomères réactives vis-à-vis du système de réticulation.

De manière préférentielle, l'élastomère B est un élastomère diénique.

Par élastomère (ou indistinctement caoutchouc) "diénique", doit être compris de manière connue un (ou plusieurs) élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a) - tout homopolymère d'un monomère diène conjugué, notamment tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant de 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère oléfinique insaturé dont la chaine comporte au moins des unités monomères oléfiniques, c'est à dire des unités issues de l'insertion d'au moins une α-oléfine ou l'éthylène, et des unités monomères diéniques issues d'au moins un diène conjugué ;
(e) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

Dans le cas de copolymères du type (b), ceux-ci contiennent de 20 à 99% en poids d'unités diéniques et de 1 à 80% en poids d'unités vinylaromatiques.

A titre de diènes conjugués conviennent notamment le 1,3-butadiène, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

De manière plus préférentielle, l'élastomère B est un élastomère diénique essentiellement insaturé choisi dans le groupe constitué par les polybutadiènes, les polyisoprènes, les copolymères de butadiène, les copolymères d'isoprène, et les mélanges de ces élastomères. A titre d'élastomère diénique convient tout particulièrement un polybutadiène (BR), un copolymère de 1,3-butadiène et de styrène (SBR), un caoutchouc naturel (NR) ou un polyisoprène de synthèse (IR) présentant préférentiellement un taux molaire de liaison cis-1,4 supérieur à 90%.

Selon un mode de réalisation de la première variante de l'invention, la matrice élastomère consiste en l'élastomère A et en l'élastomère B.

Selon un mode de réalisation de la première variante de l'invention, les unités monomères du premier ester de l'acide méthacrylique présentes dans l'élastomère A représentent 100% en mole des unités monomères de l'élastomère A. Dans le cas où le premier ester de l'acide méthacrylique est un mélange d'esters de l'acide méthacrylique, l'élastomère A est un copolymère de ces esters de l'acide méthacrylique. Dans le cas où le premier ester de l'acide méthacrylique consiste en un seul ester de l'acide méthacrylique, l'élastomère A est un homopolymère du premier ester de l'acide méthacrylique. Avantageusement, l'élastomère A est un homopolymère du méthacrylate de 2-éthylhexyle, un homopolymère de méthacrylate de n-octyle, un homopolymère du méthacrylate d'isodécyle ou un homopolymère du méthacrylate de n-tridécyle. Ce mode de réalisation peut s'appliquer à l'un quelconque des modes de réalisation de cette première variante de l'invention.

Selon un mode de réalisation particulier de la première variante de l'invention, l'élastomère A peut comprendre en plus des unités monomères du premier ester de l'acide méthacrylique des unités vinylaromatiques, notamment des unités monomères de styrène.

Selon une deuxième variante de l'invention, l'élastomère A comprend des unités monomères réactives vis-à-vis du système de réticulation.

De préférence, l'élastomère A comprend des unités monomères d'un (un ou plusieurs) deuxième monomère, lesquelles unités monomères sont réactives vis à vis du système de réticulation. La proportion d'unités monomères du deuxième monomère dans l'élastomère A est ajustée par l'homme du métier en fonction de la réactivité des unités monomères du deuxième monomère vis-à-vis du système de réticulation ainsi que du degré de réticulation visé de la composition de caoutchouc.

Les unités monomères du deuxième monomère sont choisies de façon appropriée par l'homme du métier en fonction de la réactivité du système de réticulation. Lorsque le système de réticulation comprend un composé ayant au moins deux groupes nucléophiles, les unités monomères du deuxième monomère sont électrophiles, c'est-à-dire les unités monomères du deuxième monomère portent un groupe électrophile ; et inversement lorsque le système de réticulation comprend un composé ayant au moins deux groupes électrophiles, les unités monomères du deuxième monomère sont de préférence nucléophiles, c'est-à-dire les unités monomères du deuxième monomère portent un groupe nucléophile. Comme groupe électrophile conviennent par exemple le groupe imide, le groupe époxy ou le groupe carbonate ; comme groupe nucléophile on peut citer le groupe NH₂ ou le groupe OH, en particulier celui des alcools ou des acides carboxyliques. Lorsque le système de réticulation est à base de soufre, de peroxyde ou de bismaléimide, les unités monomères du deuxième monomère peuvent contenir au moins une double liaison carbone-carbone qui réagit notamment par voie radicalaire avec le système de réticulation. Ainsi, les unités monomères du deuxième monomère contiennent par exemple au moins un groupe NH2, OH, imide, carbonate, époxy ou une double liaison carbone-carbone.

De manière plus préférentielle, l'élastomère A est de préférence un copolymère du premier ester de l'acide méthacrylique et du deuxième monomère. Autrement dit les unités monomères qui constituent l'élastomère A consistent en les unités monomères du premier ester de l'acide méthacrylique et les unités monomères du deuxième monomère.

A titre de deuxième monomère ayant des unités monomères contenant au moins une double liaison carbone-carbone, on peut citer les 1,3-diènes, notamment le 1,3-butadiène et l'isoprène. Typiquement la proportion d'unités monomères de 1,3-diène dans l'élastomère A est d'au moins 2 moles pour 100 moles d'unités monomères de l'élastomère A, par exemple elle varie dans un domaine allant de 2 à 80 moles pour 100 moles d'unités monomères de l'élastomère A.

A titre de deuxième monomère, on peut citer aussi les esters de l'acide méthacrylique, lesquels esters portent un site réactif vis-à-vis du système de réticulation dans leur unité monomère. On peut citer ceux ayant au moins une double liaison carbone-carbone tel que le méthacrylate de dicyclopentadiényloxyéthyle. On peut également citer les esters qui portent un groupe imide, carbonate ou époxy tels que le méthacrylate de N-hydroxysuccinimide, le méthacrylate de glycérol carbonate, le méthacrylate de glycidyle. Typiquement la proportion d'unités monomères de ces esters de l'acide méthacrylique portant un site réactif vis-à-vis du système de réticulation est d'au moins 0.2 moles pour 100 moles d'unité monomères, plus préférentiellement entre 0.2 et 10 moles pour 100 moles d'unités monomères de l'élastomère A. Ce taux est ajusté par l'homme du métier en fonction de la réactivité des unités monomères du deuxième monomère vis-à-vis du système de réticulation ainsi que du degré de réticulation visé.

Selon un mode de réalisation particulier de la deuxième variante de l'invention, l'élastomère A peut comprendre en plus des unités monomères du deuxième monomère des unités vinylaromatiques, notamment des unités monomères de styrène.

En plus de l'élastomère A réactif vis-à-vis du système de réticulation, la matrice élastomère peut comprendre un (un ou plusieurs) autre élastomère C. L'élastomère C peut être l'élastomère B tel que défini dans la première variante de l'invention.

Selon l'un quelconque des modes de réalisation de la deuxième variante de l'invention, le taux d'élastomère A est de préférence supérieur à 50 pce, de manière plus préférentielle supérieur à 80 pce.

Une caractéristique essentielle de la composition de caoutchouc conforme à l'invention est de comprendre un système de réticulation.

Le choix du système de réticulation est fait en fonction de la structure chimique des sites réactifs portés par la matrice élastomère, comme mentionné précédemment. Le taux du ou des composés qui constituent le système de réticulation introduit dans la composition de caoutchouc est ajusté par l'homme du métier en fonction du degré de réticulation visé de la composition de caoutchouc et de la nature chimique du système de réticulation. Ce taux de réticulation est défini selon la rigidité souhaitée de la composition de caoutchouc à l'état réticulé, cette rigidité variant selon l'application envisagée de la composition de caoutchouc.

Par exemple, lorsque le système de réticulation est un système à base de soufre, le soufre pouvant être apporté par un donneur de soufre, le système de réticulation est de préférence un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus. On peut citer à titre d'accélérateur (primaire ou secondaire) de vulcanisation tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. Le soufre est utilisé à un taux préférentiel compris entre 0,5 et 12 pce, en particulier entre 1 et 10 pce. L'accélérateur primaire de vulcanisation est utilisé dans la composition de caoutchouc à un taux préférentiel compris entre 0,5 et 10 pce, plus préférentiellement compris entre 0,5 et 5,0 pce.

Lorsque le système de réticulation comprend un composé ayant au moins deux groupes réactifs nucléophiles ou électrophiles tel que définis précédemment, la quantité de système de réticulation introduit dans la composition de caoutchouc est indexée sur le nombre de mole de groupes réactifs de ce composé par rapport au nombre de sites réactifs de la matrice élastomère. La quantité de ce composé introduit dans la composition de caoutchouc varie de préférence de 0.05 à 5, de manière plus préférentielle de 0.05 à 2 équivalents molaires de groupes réactifs nucléophiles ou électrophiles de ce composé pour une mole de site réactif de la matrice élastomère. Ces plages préférentielles peuvent s'appliquer à l'un quelconque des modes de réalisation de la deuxième variante de l'invention.

Dans le choix du composé appartenant au système de réticulation ayant au moins deux groupes réactifs nucléophiles ou électrophiles selon la réactivité de l'élastomère A, on peut se référer à l'article « Chemical modification of polymers Part II. « Attachment of carboxylic acid containing molecules to polymers" de J. C. Soutif et J. C. Brosse dans Reactive Polymers, 12 (1990) 133-153 ainsi qu'à l'article « Reactive Applications of Cyclic Alkylene Carbonates » de John H. Clements dans Industrial & Engineering Chemistry Research 2003 42, 4, 663-674). Le premier article présente les fonctions réactives avec les groupes époxy, le second les fonctions réactives avec les carbonates, notamment les acides, les alcools et les amines.

Comme composé appartenant au système de réticulation ayant au moins deux groupes réactifs vis-à-vis de l'élastomère A, on peut citer les polyacides, en particulier les diacides, ou leur forme déshydratées, à savoir les anhydrides, les polyamines, en particulier les diamines. Par exemple, à titre de polyacides disponibles dans le commerce et utiles aux besoins de l'invention, on peut citer l'acide oxalique, l'acide succinique, l'acide adipique, l'acide sébacique, l'acide dodécanedioïque, l'acide téréphtalique, l'acide trimésique et l'acide 3,4-bis(carboxyméthyl)cyclopentanecarboxylique. A titre de polyamines, on peut citer par exemple le 1,6-diaminohexane, le 1,8-diaminooctane et la famille des « Jeffamines » de la société Huntsman, dans laquelle l'homme du métier saura choisir la polyamine la plus appropriée par rapport aux propriétés attendues de la composition de caoutchouc réticulée.

La composition de caoutchouc de la bande de roulement conforme à l'invention comporte tout type de charge dite renforçante, connue pour ses capacités à renforcer une composition de caoutchouc utilisable pour la fabrication de pneumatiques, par exemple une charge organique renforçante telle que du noir de carbone, une charge inorganique renforçante telle que de la silice, ou encore un mélange de ces deux types de charge.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs conventionnellement utilisés dans les bandes de roulement de pneumatique. Parmi ces derniers, on citera plus particulièrement les noirs de carbone renforçants des séries 100, 200, 300 (grades ASTM), comme par exemple les noirs N115, N134, N234, N326, N330, N339, N347, N375. Ces noirs de carbone peuvent être utilisés à l'état isolé, tels que disponibles commercialement, ou sous tout autre forme, par exemple comme support de certains des additifs de caoutchouterie utilisés.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g.

A titre de charge inorganique renforçante, on citera également les charges minérales du type alumineuse, en particulier de l'alumine (Al₂O₃) ou des (oxyde)hydroxydes d'aluminium, ou encore des oxydes de titane renforçants, par exemple décrits dans US 6 610 261 et US 6 747 087.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

De manière préférentielle, le taux de charge renforçante est compris entre 40 et 200 pce. En deçà de 40 pce, le renforcement de la composition de caoutchouc est insuffisant pour apporter un niveau de cohésion ou de résistance à l'usure adéquats de la composition de caoutchouc. De manière plus préférentielle, le taux de charge renforçante est d'au moins 50 pce. Au-delà de 200 pce, il existe un risque d'augmentation de l'hystérèse et donc de la résistance au roulement des pneumatiques. Pour cette raison, le taux de charge renforçante est avantageusement dans un domaine allant de 50 à 200 pce, mieux de 50 à 160 pce. Ces plages préférentielles du taux de charge renforçante peuvent s'appliquer à l'un quelconque des modes de réalisation de l'invention.

Selon un mode de réalisation de l'invention, la charge renforçante comprend un noir de carbone.

Selon un autre mode de réalisation de l'invention, la charge renforçante comprend une charge inorganique renforçante, préférentiellement une silice.

Selon un mode de réalisation préférentiel de l'invention, la charge renforçante est constituée majoritairement en poids d'une charge inorganique renforçante, ce qui signifie que la charge inorganique renforçante constitue plus de 50% en poids de la charge renforçante de la composition de caoutchouc conforme à l'invention. Cette charge inorganique renforçante est préférentiellement une silice. Ce mode de réalisation selon laquelle la silice constitue plus de 50% en poids de la charge renforçante de la composition de caoutchouc peut s'appliquer à l'un quelconque des modes de réalisation de l'invention.

Selon un mode de réalisation particulier où la charge inorganique renforçante telle que la silice représente plus de 50% en poids de la charge renforçante, le noir de carbone est utilisé de préférence à un taux inférieur à 20 pce, plus préférentiellement inférieur à 10 pce (par exemple entre 0.5 et 20 pce, notamment entre 2 et 10 pce), encore plus préférentiellement inférieur à 5 pce. Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

Pour coupler la charge inorganique renforçante à au moins un des élastomères qui constituent la matrice élastomère de la composition de caoutchouc, notamment dans le cas où la charge inorganique constitue plus de 50% en poids de la charge renforçante de la composition de caoutchouc, on utilise généralement et de manière bien connue un agent de couplage (ou agent de liaison). Par agent de couplage, on entend plus précisément un agent apte à établir une liaison suffisante de nature chimique et/ou physique entre la charge considérée et l'élastomère, tout en facilitant la dispersion de cette charge au sein de la matrice élastomère.

Cet agent au moins bifonctionnel est destiné à assurer une connexion suffisante, de nature chimique et/ou physique, entre la charge inorganique (surface de ses particules) et l'élastomère. On utilise en particulier des organosilanes, notamment des alkoxysilanes polysulfurés ou des mercaptosilanes, ou encore des polyorganosiloxanes porteurs de fonctions capables de se lier physiquement et/ou chimiquement à la charge inorganique et de fonctions capables de se lier physiquement et/ou chimiquement à l'élastomère, par exemple par l'intermédiaire d'un atome de soufre. Des agents de liaison silice/élastomère, notamment, ont été décrits dans un grand nombre de documents, les plus connus étant des alkoxysilanes bifonctionnels tels que des alkoxysilanes polysulfurés. On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevet WO 02/30939 (ou US 6,774,255) et WO 02/31041 (ou US 2004/051210), ou encore des silanes ou POSS porteurs de groupes fonctionnels azo-dicarbonyle, tels que décrits par exemple dans les demandes de brevet WO 2006/125532, WO 2006/125533, WO 2006/125534.

La teneur en agent de couplage, qu'il s'agisse d'un seul composé ou d'un mélange de composés, est avantageusement inférieure à 20 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition.

La composition de caoutchouc conforme à l'invention peut également contenir des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité de la composition de caoutchouc, d'améliorer sa faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

La composition de caoutchouc conforme à l'invention peut aussi comporter également tout ou partie des additifs usuels habituellement utilisés dans les compositions de caoutchouc destinées à la fabrication de pneumatiques, comme par exemple des plastifiants, des pigments, des agents de protection tels que cires anti-ozone, anti-ozonants chimiques, anti-oxydants, des agents anti-fatigue et les mélanges de tels composés.

La composition de caoutchouc conforme à l'invention peut être fabriquée dans des mélangeurs appropriés, en utilisant généralement deux phases de préparation successives bien connues de l'homme du métier : une première phase de travail ou malaxage thermomécanique (phase dite « non-productive ») à haute température, jusqu'à une température maximale comprise entre 110°C et 190°C, de préférence entre 120°C et 180°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

La composition de caoutchouc conforme à l'invention peut être préparée selon un procédé qui comprend les étapes suivantes :
- malaxer thermomécaniquement la matrice élastomère, la charge renforçante, le cas échéant l'agent de couplage, le cas échéant le système plastifiant, et les autres additifs de la composition de caoutchouc à l'exception du système de réticulation, jusqu'à atteindre une température maximale comprise entre 110°C et 190°C ;
- refroidir l'ensemble à une température inférieure à 100°C ;
- incorporer ensuite le système de réticulation ;
- malaxer le tout jusqu'à une température maximale inférieure à 110°C pour obtenir une composition de caoutchouc.

Après l'incorporation de tous les ingrédients de la composition de caoutchouc, la composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé comme composant caoutchouteux, notamment pour la confection du pneumatique. La composition de caoutchouc conforme à l'invention peut être utilisée sous forme de calandrage dans un pneumatique. Le calandrage ou l'extrudat formé à partir de la composition de caoutchouc constitue en tout ou en partie un produit semi-fini, en particulier d'un pneumatique.

Ainsi selon un mode de réalisation particulier de l'invention, la composition de caoutchouc conforme à l'invention, pouvant être soit à l'état cru (avant réticulation ou vulcanisation), soit à l'état cuit (après réticulation ou vulcanisation), est dans un pneumatique, par exemple dans une bande de roulement de pneumatique.

La réticulation (ou cuisson), le cas échéant la vulcanisation, est conduite de manière connue à une température généralement comprise entre 130°C et 200°C, pendant un temps suffisant qui peut varier par exemple entre 5 et 120 min en fonction notamment de la température de cuisson, du système de réticulation adopté et de la cinétique de réticulation de la composition considérée.

La bande de roulement pour pneumatique, autre objet de l'invention, a pour caractéristique essentielle d'être constituée en tout ou en partie de la composition de caoutchouc conforme à l'invention. La bande de roulement peut être fabriquée selon le procédé décrit ci-dessus qui comporte une étape supplémentaire de calandrage ou d'extrusion de la composition de caoutchouc.

L'invention concerne aussi la bande de roulement précédemment décrite tant à l'état cru (c'est à dire, avant cuisson) qu'à l'état cuit (c'est à dire, après réticulation ou vulcanisation).

L'invention concerne aussi le pneumatique comportant un article semi-fini conforme à l'invention, lequel pneumatique est tant à l'état cru qu'à l'état cuit, l'article semi-fini étant de préférence une bande de roulement.

Le pneumatique conforme à l'invention peut être préparé par le procédé qui comprend les étapes suivantes :
- malaxer thermomécaniquement la matrice élastomère, la charge renforçante, le cas échéant l'agent de couplage, le cas échéant le système plastifiant, et les autres additifs de la composition de caoutchouc à l'exception du système de réticulation, jusqu'à atteindre une température maximale comprise entre 110°C et 190°C ;
- refroidir l'ensemble à une température inférieure à 100°C ;
- incorporer ensuite le système de réticulation ;
- malaxer le tout jusqu'à une température maximale inférieure à 110°C pour obtenir une composition de caoutchouc,
- calandrer ou extruder la composition de caoutchouc.

### II. EXEMPLES DE REALISATION DE L'INVENTION

### II.1-Mesures et tests utilisés :

### II.1-1 Détermination de la température de transition vitreuse des élastomères :

Les températures de transition vitreuse Tg des polymères sont mesurées au moyen d'un calorimètre différentiel ("Differential Scanning Calorimeter") selon la norme ASTM D3418-08.

### 11.1-2 Détermination de la microstructure des élastomères par analyse RMN :

La détermination du taux d'unités méthacrylate est réalisée par une analyse RMN 1H. Les spectres sont acquis sur un spectromètre Avance 500 MHz BRUKER équipé d'une cryosonde "large bande" BBFO z-grad 5 mm pour les échantillons solubles et d'une sonde HRMAS 4mm ¹H/¹³C pour les échantillons réticulés insolubles.

L'expérience RMN 1H quantitative, utilise une séquence simple impulsion 30° et un délai de répétition de 5 secondes entre chaque acquisition. Les échantillons sont solubilisés dans le chloroforme deutéré.

Le spectre de corrélation RMN 2D ¹H/¹³C ¹J HSQC édité permet de vérifier la structure des unités méthacrylate grâce aux déplacements chimiques des atomes de carbone et de protons. Des spectres de corrélation longue distance ³J HMBC ¹H/¹³C permettent de consolider ces informations. Les spectres RMN 1D 13C permettent de vérifier l'enchaînement des unités (diades et triades) et d'accéder à la tacticité des copolymères.

Les déplacements chimiques sont calibrés par rapport à l'impureté protonée du chloroforme par rapport au tétraméthylsilane, TMS (δppm ¹H et δppm ¹³C à 0 ppm).

### II.1-2a) Attribution des signaux RMN 1H utilisés pour la quantification :

Exemple des copolymères butadiène/2-éthylhexylméthacrylate et butadiène/n-octylméthacrylate : attribution des signaux RMN 1H utilisés pour la quantification :

| δ ¹H (ppm) | Nombre de protons | Attribution |
|---|---|---|
| 3,4 à 4.0 | 2 | CH2-O en alpha du groupe ester des motifs 2-éhylhexylméthacrylate |
| 3,6 à 4.2 | 2 | CH2-O en alpha du groupe ester des motifs n-octylméthacrylate |
| 4,6 à 4,9 | 2 | CH2 éthylénique des motifs 1,2 (vinyliques) de la partie butadiénique |
| 4,9 à 5,7 | 1+2 | CH éthylénique du motif 1,2 de la partie butadiénique et 2 CH éthyléniques du motif 1,4 de la partie butadiénique. |

Exemple d'un copolymère butadiène/ méthacrylate de glycidyle : attribution des signaux RMN 1H utilisés pour la quantification :

| δ ¹H (ppm) | Nombre de protons | Attribution |
|---|---|---|
| 4.32/3.80/3.12/2.75/2.57 | 1/1/1/1/1 | CH2-O en alpha de l'éther ; CH et CH2 du glycidyle des motifs méthacrylate de glycidyle |
| 4,6 à 4,9 | 2 | CH2 éthylénique des motifs 1,2 de la partie butadiénique |
| 4,9 à 5,7 | 1+2 | CH éthylénique du motif 1,2 de la partie butadiénique et 2 CH éthyléniques du motif 1,4 de la partie butadiénique. |

### 11.1-3 Détermination de la macrostructure des élastomères par analyse SEC

On utilise la technique SEC (Size Exclusion Chromatography) qui permet de séparer les macromolécules en solution suivant leur taille à travers des colonnes remplies d'un gel poreux. Les macromolécules sont séparées suivant leur volume hydrodynamique, les plus volumineuses étant éluées en premier.

SEC (étalonnage PS) : la SEC est couplée à un réfractomètre, elle donne dans ce cas des informations relatives. À partir de produits étalons commerciaux, les différentes masses molaires moyennes en nombre (*M*ₙ) et en poids (*M*_{w}) qui caractérisent la distribution de masses molaires du polymère, peuvent être déterminées et l'indice de polymolécularité (Ip = *M*_{w}/*M*ₙ) calculé *via* un étalonnage dit de Moore. Il n'y a pas de traitement particulier de l'échantillon de polymère avant analyse. Celui-ci est simplement solubilisé dans le solvant d'élution à une concentration d'environ 1 g/L. La solution est ensuite filtrée sur un filtre de porosité 0,45 µm avant injection.
L'appareillage utilisé est une chaîne chromatographique "WATERS alliance". Le solvant d'élution est soit le tétrahydrofurane, soit le tétrahydrofurane + 1 vol.% de diisopropylamine + 1 vol.% de triéthylamine, le débit de 0,7 mL/min, la température du système de 35 °C et la durée d'analyse de 90 min. On utilise un jeu de quatre colonnes WATERS (1 colonne Styragel HMW7 + 1 colonne Styragel HMW6E + 2 colonnes Styragel HT6E). Le volume injecté de la solution d'échantillon de polymère est 100 µL. Le détecteur est un réfractomètre différentiel "WATERS 2414" et le logiciel d'exploitation des données chromatographiques est le système "WATERS EMPOWER".
Les masses molaires moyennes calculées sont relatives à une courbe d'étalonnage réalisée à partir de polystyrènes étalons commerciaux « PSS READY CAL-KIT ».

SEC double détection (étalonnage universel) : la SEC est une méthode absolue si elle dispose d'une double détection composée d'un réfractomètre et d'un viscosimètre. Dans ce cas, les différentes masses molaires moyennes en nombre (*M*ₙ) et en poids (*M*_{w}) sont déterminées *via* un étalonnage universel. Il n'y a pas de traitement particulier de l'échantillon de polymère avant analyse. Celui-ci est simplement solubilisé dans le solvant d'élution à une concentration d'environ 1 g/L. La solution est ensuite filtrée sur un filtre de porosité 0,45 µm avant injection. L'appareillage utilisé est une chaîne chromatographique "WATERS alliance". Le solvant d'élution est soit le tétrahydrofurane, soit le tétrahydrofurane + 1 vol.% de diisopropylamine + 1 vol.% de triéthylamine, le débit de 0,7 mL/min, la température du système de 35 °C et la durée d'analyse de 90 min. On utilise un jeu de quatre colonnes WATERS (1 colonne Styragel HMW7 + 1 colonne Styragel HMW6E + 2 colonnes Styragel HT6E). Le volume injecté de la solution d'échantillon de polymère est 100 µL. Le détecteur est un appareil TDA 302 de VISCOTEK, il est composé d'un réfractomètre différentiel et d'un viscosimètre. Les données sont traitées avec le logiciel OMNISEC.

### 11.1-4 Détermination du coefficient de frottement et du coefficient d'adhérence :

Le coefficient de frottement a été mesuré sur éprouvette, le coefficient d'adhérence a été mesuré sur des pneumatiques montés sur une remorque. Dans les tableaux des exemples, le coefficient de frottement et le coefficient d'adhérence sont répertoriés sous les appellations « µ laboratoire » et « µ Trailer » respectivement.

### Méthode de mesure du coefficient de frottement (µ laboratoire) :

Les mesures de coefficient de frottement dynamique ont été réalisées selon une méthode identique à celle décrite par L. Busse, A. Le Gal, et M. Küppel (Modelling of Dry and Wet Friction of Silica Filled Elastomers on Self-Affine Road Surfaces, Elastomere Friction, 2010, 51, p. 8). Les éprouvettes sont réalisées par moulage, puis réticulation d'un support caoutchouteux carré (50mmx50mm) de 6 mm d'épaisseur. Après fermeture du moule, celui-ci est placé dans une presse à plateaux chauffants à la température (typiquement 150°C), et pendant le temps nécessaires à la réticulation du matériau (typiquement plusieurs dizaines de minutes), à une pression de 16 bars. Le sol utilisé pour réaliser ces mesures est une carotte prélevée sur un sol routier réel en béton bitumineux de type BBTM (norme NF P 98-137). Pour éviter les phénomènes de démouillage et l'apparition de forces d'adhésion parasites entre le sol et le matériau, le système sol+éprouvette est immergé dans une solution aqueuse à 5% d'un agent tensio-actif (Sinnozon - numéro CAS : 25155-30-0). La température de la solution aqueuse est régulée à l'aide d'un bain thermostatique. L'éprouvette est soumise à un mouvement de glissement en translation parallèlement au plan du sol. La vitesse de glissement Vg est fixée à 0.03 m/sec. La contrainte normale appliquée σₙ est de 100 kPa. Ces conditions sont décrites ci-après par « conditions de sol mouillé ». On mesure en continu la contrainte tangentielle σₜ opposée au mouvement de l'éprouvette sur le sol. Le rapport entre la contrainte tangentielle σₜ et la contrainte normale σₙ donne le coefficient de frottement dynamique µ. Les valeurs indiquées dans les exemples sont les valeurs de coefficient de frottement dynamique mesurées pour une température de solution aqueuse de 20 et 40°C, obtenues en régime permanent après stabilisation de la valeur de la contrainte tangentielle σₜ. Une valeur supérieure à celle de la référence, arbitrairement fixée à 100, indique un résultat amélioré.

### Méthode de mesure du coefficient d'adhérence (µ Trailer) :

Le test Trailer est un test d'adhérence utilisé pour déterminer le coefficient d'adhérence (ou coefficient de force maximale de freinage) µ Trailer , qui est la valeur la plus élevée du coefficient de force dynamique de freinage en temps réel, avant le blocage de roues, à partir d'une mise en glissement d'un ensemble pneumatique/jante (monté sur un moyeu dynamométrique à 65km/h) sur sol mouillé.

Ce test est réalisé dans les conditions de la méthode d'essai d'adhérence sur sol mouillé pour les pneumatiques de classe C1 décrite dans le Règlement(UE) No 228/2011. Il diffère par le choix du pneumatique de référence : les pneumatiques candidats sont comparés au pneumatique Primacy HP, choisi comme témoin dans les exemples de la présente demande de brevet, et non au pneumatique de référence décrit dans le Règlement(UE) No 228/2011 et dont les caractéristiques sont indiquées dans la norme ASTM F 2493-08 16 pouces (SRTT16").

Les valeurs indiquées dans les exemples sont les coefficients d'adhérence µ Trailer mesurées pour les candidats rapportés au coefficient d'adhérence µ Trailer du pneu choisi comme référence le Primacy HP, mesuré dans les mêmes conditions, notamment à la même température à 23°C. Une valeur supérieure à celle de la référence, arbitrairement fixée à 100, indique un résultat amélioré.

### 11.1-5 Résistance au roulement des pneumatiques :

La résistance au roulement est mesurée sur un volant, selon la méthode ISO 87-67 (1992). Une valeur supérieure à celle de la référence, arbitrairement fixée à 100, indique un résultat amélioré c'est-à-dire une résistance au roulement plus basse.

### 11.1-6 Adhérence sur sol mouillé des pneumatiques :

Les pneumatiques sont montés sur un véhicule automobile de marque Renault et de modèle Mégane 1.6 RTE, équipé d'un système de freinage ABS et la distance nécessaire pour passer de 80 km/h à 10 km/h est mesurée lors d'un freinage brutal sur sol arrosé (béton bitumineux). Les résultats sont donnés pour une température donnée, qui est la température de l'eau sur le sol arrosé. Une valeur supérieure à celle de la référence, arbitrairement fixée à 100, indique un résultat amélioré, c'est-à-dire une distance de freinage plus courte.

### 11.1-7 Adhérence sur sol sec des pneumatiques :

Les pneumatiques sont montés sur un véhicule automobile de marque Renault et de modèle Mégane 1.6 RTE, équipé d'un système de freinage ABS et on mesure la distance nécessaire pour passer de 100 Km/h à 0 Km/h lors d'un freinage brutal sur sol sec (béton bitumineux). Une valeur supérieure à celle de la référence, arbitrairement fixée à 100, indique un résultat amélioré, c'est-à-dire une distance de freinage plus courte.

### II.2-Préparation des élastomères :

### II.2-1 Synthèse de l'élastomère E1 : copolymère de 1,3-butadiène et de méthacrylate de 2-éthylhexyle :

La réaction a lieu dans un réacteur de 100 litres. 0,7 Kg (5 pce) de stéarate de sodium sont dissous dans 27 litres d'eau déminéralisée. 6,29 g de tert-dodecyl mercaptan (0,05 équivalent d'agent de transfert par rapport au persulfate de potassium), 3,01Kg de butadiène et 11Kg de méthacrylate de 2-éthylhexyle sont ajoutés au milieu réactionnel. Le réacteur est mis en chauffe à 50°C avec une vitesse d'agitation de 80 tr/min, avant d'introduire 0,168Kg (1,2 pce) de persulfate de potassium. Après 95 minutes de réaction de polymérisation, 61% de conversion de monomères en copolymère est atteint. La réaction est alors arrêtée par ajout de 0,42Kg (3 pce) de résorcinol. Un mélange d'antioxydants de 4,4'-méthylène-bis-2,6-tert-butylphénol et de N-(1,3-diméthylbutyl)-N'-phényl-p-phénylènediamine (20% massique/80% massique) préparé à l'état fondu et dilué dans de l'eau et du tensioactif (stéarate de sodium), (0,5 pce) est ensuite ajouté au latex de copolymère. Le latex antioxydé est ensuite transféré dans un strippeur dans lequel sont ajoutés 0,2 pce d'agent antimousse Foamaster afin d'éviter le moussage de l'émulsion au cours du stripping. L'étape de stripping est effectuée à 100 °C. La solution de polymère strippée est additionnée lentement sur une solution de sulfate d'aluminium (14 pce d'agent déstabilisant par rapport au polymère) dans l'eau sous une agitation à 100 tr/mn. Il se forme des particules de polymère qui remontent à la surface dès que l'on arrête l'agitation. Ces particules sont lavées jusqu'à ce que le pH atteigne une valeur de 7. Les particules de polymère sont récupérées et séchées sur une vis à une température supérieure à 100 °C. 8,4Kg de copolymère à base de butadiène et de méthacrylate de 2-éthylhexyle sont récupérés avec un taux de matière volatile inférieure à 0,5%.

Le copolymère obtenu possède les caractéristiques suivantes :
Tg = -53 °C
Mn = 254 100g/mol (étalonnage PS) et Ip= 3,4
% molaire (unité monomère de méthacrylate de 2-éthylhexyle) = 45.5
% molaire (unité monomère de butadiène) = 54.5

### 11.2-2 Synthèse de l'élastomère E2 : copolymère de 1,3-butadiène et de styrène :

La polymérisation anionique est effectuée dans une bouteille capsulée sous agitation modérée et sous atmosphère inerte d'azote. Avant de débuter la polymérisation, le méthylcyclohexane est introduit dans la bouteille. La bouteille est capsulée et un barbotage à l'azote est effectué pendant 10 minutes. Le butadiène, le styrène et l'additif polaire (THF) sont ensuite injectés dans la bouteille. Une neutralisation des impuretés est faite par ajout dosé de n-BuLi directement sur le mélange de monomère, solvant et éventuellement agent polaire. La solution d'amorceur (n-BuLi) est ajoutée sur ce mélange neutralisé de solvant, de butadiène et de styrène. La température du milieu réactionnel est de 50 °C. En fin de polymérisation, une solution de méthanol en solution dans du méthylcyclohexane est ajoutée sur le polymère vivant afin de protoner les chaînes vivantes. La solution de polymère est soumis à un traitement antioxydant par addition de 0,2 partie pour cent parties d'élastomère (pce) de 4,4'-méthylène-bis-2,6-tert-butylphénol et de 0,2 parties pour cent parties d'élastomère (pce) de N-(1,3-diméthylbutyl)-N'-phényl-p-phénylènediamine, puis le polymère est séché par étuvage à 60°C pendant 1 jour.

Le copolymère obtenu possède les caractéristiques suivantes :
Tg =-24 °C
Mn = 125 000 g/mol (étalonnage PS) et Ip = 1,1
% massique (unité monomère de styrène) = 26
% massique (unité monomère de butadiène-1,2) = 58

### 11.2-3 Synthèse de l'élastomère E3 : terpolymère de styrène, de 1,3-butadiène et de méthacrylate de glycidyle :

La réaction a lieu dans un réacteur de 30 litres. 0,1 Kg (5 pce) de stéarate de sodium sont dissous dans 17 litres d'eau déminéralisée. 0,9 g de tert-dodecyl mercaptan (0,05 équivalent d'agent de transfert par rapport au persulfate de potassium), 0,270 Kg de styrène, 1,50 Kg de butadiène et 0,230 Kg méthacrylate de glycidyle sont ajoutés au milieu réactionnel. Le réacteur est mis en chauffe à 40°C avec une vitesse d'agitation de 190 tr/min, avant d'introduire 0,024 Kg (1,2 pce) de persulfate de potassium en solution dans 1,2 L d'eau. Après 380 minutes de réaction de polymérisation, 61% de conversion de monomères en copolymère est atteint. La réaction est alors arrêtée par ajout de 0,02 Kg (1 pce) de résorcinol. Le latex est ensuite transféré dans un strippeur dans lequel sont ajoutés 0,2 pce d'agent antimousse Foamaster afin d'éviter le moussage de l'émulsion au cours du stripping. L'étape de stripping est effectuée à 100 °C. La solution de polymère strippée est additionnée lentement sur une solution de sulfate d'aluminium (14 pce d'agent déstabilisant par rapport au polymère) dans l'eau sous une agitation à 100 tr/mn. Il se forme des particules de polymère qui remontent à la surface dès que l'on arrête l'agitation. Ces particules sont lavées jusqu'à ce que le pH atteigne une valeur de 7. Les particules de polymère sont récupérées et séchées sous vide à 60 °C. 0,94Kg de copolymère à base de butadiène et de méthacrylate de 2-éthylhexyle sont récupérés avec un taux de matière volatile inférieure à 0,5%.

Le copolymère obtenu possède les caractéristiques suivantes :
Tg =-59 °C
% molaire (unité monomère de styrène) = 9
% molaire (unité monomère de butadiène 1.2) = 86
% molaire (unité monomère de méthacrylate de glycidyle) = 5

### 11.2-4 Synthèse de l'élastomère E4 : copolymère de méthacrylate de glycidyle et de méthacrylate de n-octyle:

Les monomères (méthacrylate de n-octyle, méthacrylate de glycidyle (MAGLY)), l'amorceur (terbutylperoxypivalate (TBPPI)) et le solvant (méthyléther cétone (MEK)) sont introduits dans un ballon équipé d'un réfrigérant en suivant les proportions indiquées dans le tableau suivant. Trois cycles vide/argon sont effectués, puis le milieu réactionnel est chauffé à 65°C, la polymérisation est effectuée dans la méthyléther cétone (MEK) à 70% d'extrait sec avec un taux d'amorceur de 0,05%.

| **Nom** / **Réf**. | **MM** | **m (g)** | **n [mol]** | **% mol** |
|---|---|---|---|---|
| Méthacrylate d'octyle | 198,3 | 100,0 | 0,505 | 95,0 |
| MAGLY | 142,15 | 3,8 | 0,027 | 5,0 |
| TBPPI | 174 | 0,6 | 0,00027 | |
| MEK | | 44 | | |

La réaction est arrêtée lorsque le milieu devient trop visqueux. La conversion est de 61%. Le polymère est solubilisé dans l'acétone, puis précipité dans l'éthanol (élimination des monomères).

Le copolymère obtenu possède les caractéristiques suivantes :
Tg très étalée de -120 à 0 °C, mesurée à -53°C
Mn = 97 000 g/mol (étalonnage PS), Ip = 2,4
% molaire (unité monomère de méthacrylate de n-octyle) = 95
% molaire (unité monomère de méthacrylate de glycidyle) = 5

### 11.2-5 Préparation des élastomères E5 et E6 : polyméthacrylate de 2-éthylhéxyle et polyméthacrylate de n-octyle respectivement :

Les élastomères E5 et E6, respectivement un poly(méthacrylate de 2-éthylhexyle) et un poly(méthacrylate de n-octyle), sont fournis par l'entreprise Scientific Polymer Products, Inc en solution dans le toluène. Ces polymères ont été séchés en étuve sous vide et sous azote à 60°C pendant une nuit. La caractérisation de la macrostructure de ces polymères a été réalisée par SEC double détection (méthode absolue avec étalonnage universel).

Le poly(méthacrylate de 2-éthylhexyle) (E5) possède les caractéristiques suivantes : Tg très étalée de -110 à 0 °C, mesurée à environ -50°C
Mn = 71 500 g/mol (étalonnage universel)
Mw = 192 100 g/mol (étalonnage universel)
Ip = 2,69

Le poly(méthacrylate de n-octyle) (E6) possède les caractéristiques suivantes : Tg très étalée de - 110 à -20 °C, mesurée à-59°C
Mn = 65 300 g/mol (étalonnage universel)
Mw = 183 000 g/mol (étalonnage universel)
Ip = 2,8

### II.3-Préparation des compositions de caoutchouc :

Les formulations (en pce) des compositions C0 à C6 sont décrites dans le tableau I, III et V.

Les compositions C1, C4, C5 et C6 sont conformes à l'invention ; les compositions C0, C2, C3 et Cr sont des compositions non conformes à l'invention. La composition Cr correspond à la composition vulcanisée de la bande de roulement d'un pneumatique Pr « Primacy HP » pris comme référence en matière de freinage sur sol mouillé et sur sol sec.

Les compositions C1, C4, C5 et C6 contiennent toutes un élastomère qui comprend au moins 20% en moles des unités monomères d'un ester de l'acide méthacrylique. Les matrices élastomères respectives des compositions C1 et C4 consistent en seul élastomère, respectivement E1 et E4. Les matrices élastomères respectives des compositions C5 et C6 consistent en un mélange d'un SBR E2 et de l'élastomère respectif E5 et E6.

Les sites réactifs de la matrice élastomère vis-à-vis du système de réticulation sont portés :
- par les unités monomères du 1,3-butadiène de l'élastomère E1 dans la composition C1 ;
- par les unités monomères du méthacrylate de glycidyle de l'élastomère E4 dans la composition C4 ;
- par les unités monomères du 1,3-butadiène du SBR dans les compositions C5 et C6.

Le système de réticulation des compositions C1, C5 et C6 est un système de vulcanisation, celui de C4 est un diacide.

On procède pour la fabrication de ces compositions de la manière suivante : on introduit dans un mélangeur interne (taux de remplissage final : environ 70% en volume), dont la température initiale de cuve est d'environ 60°C, successivement les élastomères, la silice, l'agent de couplage, le cas échéant le ou les plastifiants ainsi que les divers autres ingrédients à l'exception du système de réticulation. Le système de réticulation des compositions C0, C1, C2, C5 et C6 est constitué du soufre et d'une sulfénamide ; celui pour les compositions C4 et C3 d'un diacide. On conduit alors un travail thermomécanique (phase non-productive) en une étape, qui dure au total 5 min, jusqu'à atteindre une température maximale de « tombée » de 165°C.

On récupère le mélange ainsi obtenu, on le refroidit puis on incorpore le système de réticulation sur un mélangeur (homo-finisseur) à 23°C, en mélangeant le tout (phase productive) pendant un temps approprié (par exemple entre 5 et 12 min).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

### II.4- Propriétés des compositions de caoutchouc et des pneumatiques :

Les propriétés des compositions C0 à C7 sont données en base 100 par rapport à Cr dans les tableaux II, IV et VI.

### II.4-1 Exemple dans lequel les sites réactifs de la matrice élastomère vis-à-vis du système de réticulation sont portés par l'élastomère A (en l'espèce El) : (tableaux I et II)

Les compositions C0 et C1 sont utilisées comme bandes de roulement de pneumatiques tourisme à carcasse radiale, notés respectivement P0 (pneu non conforme) et P1 (pneu conforme à l'invention), de dimensions 205/55R16 conventionnellement fabriqués et en tous points identiques au pneumatique « Primacy HP », hormis les compositions de caoutchouc constitutives de leur bande de roulement. Le pneumatique « Primacy HP » est un pneumatique de référence en matière de freinage sur sol mouillé et sur sol sec. Les performances du P1 sont comparées à celle du pneumatique Pr de référence « Primacy HP » en base 100, les résultats étant consignés dans le tableau II.

Le pneumatique P1 présente un indice de performance sur sol mouillé de 129 à 25°C, ce qui correspond à une distance de freinage significativement raccourcie comparativement au pneumatique Pr. Cette forte amélioration de la performance de freinage sur sol mouillé ne se fait pas au détriment de la performance de freinage sur sol sec. Effectivement l'indice de performance de P1 est même légèrement amélioré par rapport à Pr. Par ailleurs, on observe de façon surprenante une augmentation de la résistance au roulement qui est seulement de 5%, compte-tenu de l'amélioration des performances de freinage.

Le coefficient de frottement d'une éprouvette constituée de la composition C1 et mesuré à 20°C, est augmenté de 29% par rapport à celui de la composition Cr. La mesure du coefficient d'adhérence effectuée sur le pneumatique à 23°C donne un résultat comparable, soit une amélioration de 28%. Ces résultats, coefficient de frottement et coefficient d'adhérence, sont en très bon accord avec le gain de près de 30% mesuré en freinage sur sol mouillé.

On note que la méthode de mesure du coefficient de frottement µ laboratoire d'une composition de caoutchouc réalisée sur éprouvette est ici représentative de la performance d'adhérence sur sol mouillé d'un pneumatique dont la bande de roulement serait constituée de cette composition de caoutchouc. Elle permet d'obtenir un bon descripteur de la performance de freinage sur sol mouillé des matériaux bande de roulement.

En revanche, sur l'exemple non conforme (respectivement la composition C0 et le pneumatique PO), on n'observe ni amélioration du coefficient de frottement, ni amélioration du coefficient d'adhérence par rapport à la référence (respectivement Cr et Pr) : les valeurs de coefficients restent inférieures à ceux de la référence.

Ces résultats démontrent de façon inattendue que l'incorporation d'au moins 20% en moles d'unité monomère de méthacrylate de 2-éthylhexyle dans un élastomère diénique permet d'améliorer très significativement les performances d'adhérence sur sol mouillé d'un pneumatique dont la bande de roulement contient cet élastomère, tout en conservant un bon compromis de performance entre l'adhérence sur sol sec et la résistance au roulement.

### 11.4-2 Exemple dans lequel les sites réactifs de la matrice élastomère vis-à-vis du système de réticulation sont portés par l'élastomère A (en l'espèce E3 et E4) : (tableaux III et IV)

La composition C4 est conforme à l'invention, puisqu'elle contient l'élastomère E4 comprenant au moins 20% en moles d'unité monomère de méthacrylate de n-octyle ainsi que 5% en mole d'unité monomère de méthacrylate de glycidyle, unités monomères réactives vis-à-vis du système de réticulation. En revanche, les compositions C2 et C3 ne sont pas conformes à l'invention, puisque l'élastomère E3 utilisé dans C2 et dans C3 est un terpolymère de styrène, de butadiène et de méthacrylate de glycidyle, le taux molaire d'unité monomère de méthacrylate de glycidyle étant de 5%.

Les compositions C2, C3 et C4 sont utilisées pour former des éprouvettes pour la mesure du coefficient de frottement.

Les coefficients de frottement des compositions C2 et C3 non conformes sont très proches et restent inférieurs à celui de la référence Cr.

Seul le coefficient de frottement de la composition C4 est très supérieur à celui de la référence de 40% à 20°C, ce qui traduit, comparativement au pneumatique de référence Pr, une performance d'adhérence sur sol mouillé qui est très supérieure pour le pneumatique dont la bande de roulement est constituée de la composition C4.

### 11.4-3 Exemple dans lequel les sites réactifs de la matrice élastomère vis-à-vis du système de réticulation sont portés par l'élastomère B (en l'espèce un SBR) : (tableaux V et VI)

Les compositions C5 et C6 sont toutes les deux conformes à l'invention. L'élastomère A est respectivement l'élastomère E5, soit un poly(méthacrylate de 2-éthylhexyle) dans la composition C5 et l'élastomère E6, soit un poly(méthacrylate de n-octyle) dans la composition C6. Les unités monomères réactives vis-à-vis du système de réticulation sont celles présentes dans l'élastomère E2, SBR. La composition C5 diffère de la composition C6 en ce qu'elle contient un plastifiant. Le taux de silice de la composition C5 a été par conséquent ajusté pour atteindre une fraction volumique de charge renforçante identique à celle de C6, soit 25%. Pour chacune des compositions, le taux de silane et le taux de diphénylguanidine ont été ajustés en fonction du taux de silice présent dans la composition de caoutchouc.
En résumé les compositions C5 et C6 diffèrent uniquement par la nature de l'élastomère A et de la présence d'un plastifiant.

Le coefficient de frottement respectif des compositions C5 et C6 est très supérieur à celui de la référence, ce qui traduit une performance d'adhérence sur sol mouillé qui est très supérieure pour les pneumatiques dont la bande de roulement est constituée respectivement des compositions C5 et C6 comparativement au pneumatique de référence Pr.

En résumé, les exemples montrent que l'introduction des élastomères E1, E4, E5 et E6 dans des compositions de bande de roulement permet d'améliorer significativement la performance d'adhérence sur sol mouillé comparativement au pneumatique « Primacy HP », pneumatique de référence en matière d'adhérence sur sol mouillé.

**Tableau I**

| | C0 | C1 |
|---|---|---|
| Elastomère (1) | 100 | - |
| Elastomère E1 (2) | - | 100 |
| Silice (3) | 81 | 81 |
| Noir de carbone N234 | 4 | 4 |
| Plastifiant (4) | 15 | 15 |
| Antioxydant (5) | 2 | 2 |
| Cire anti-ozone | 1.5 | 1.5 |
| Silane (6) | 6.5 | 6.5 |
| Résine plastifiante (7) | 15 | 15 |
| Acide stéarique | 2 | 2 |
| DPG (8) | 1.5 | 1.5 |
| ZnO | 3 | 3 |
| Sulfénamide (9) | 1.5 | 1.5 |
| Soufre | 1.5 | 1.5 |

| | | |
|---|---|---|
| (1) SBR 1500, Tg-50°C (2) copolymère de 1,3-butadiène et méthacrylate de 2-éthylhexyle (voir paragraphe 11.2-1) (3) Silice « Zeosil 1165 MP » de la société Rhodia (type HDS) (4) Tris(2-éthylhexyl)phosphate (5) N-(1,3-diméthylbutyl)-N'-phényl-p-phénylènediamine, de la société Flexsys (6) TESPT (« Si69 » de la société Degussa) (7) Résine polylimonène "Dercolyte L120" de la société DRT (8) Diphénylguanidine (« Perkacit » DPG de la société Flexsys) (9) N-cylohexyl-2-benzothiazol-sulfénamide (« Santocure CBS » de la société Flexsys) | | |

**Tableau II**

| Pneu | P0 | P1 | Pr référence (Primacy HP) |
|---|---|---|---|
| Composition | C0 | C1 | Cr |
| Résistance au roulement | 100 | 95 | 100 |
| Freinage mouillé 25°C | Non mesuré | 129 | 100 |
| Freinage sec | Non mesuré | 103 | 100 |
| µ Trailer (23°C) | 98 | 128 | 100 |
| µ laboratoire (20°C) | 93 | 129 | 100 |
| µ laboratoire (40°C) | 95 | 127 | 100 |

**Tableau III**

| | C2 | C3 | C4 |
|---|---|---|---|
| Elastomère E3 (1) | 100 | 100 | - |
| Elastomère E4 (2) | - | - | 100 |
| Silice (3) | 85 | 85 | 85 |
| Plastifiant (4) | 30 | 30 | 30 |
| Silane (5) | 6.5 | 6.5 | 6.5 |
| Alcoxysilane (6) | 4.3 | 4.3 | 4.3 |
| Acide stéarique | 2 | - | - |
| ZnO | 2.5 | - | - |
| Sulfénamide (7) | 1.5 | - | - |
| Soufre | 1.5 | - | - |
| Diacide (8) | - | 1 | 1 |

| | | | |
|---|---|---|---|
| (1) Terpolymère de styrène, de 1,3-butadiène et de méthacrylate de glycidyle (voir paragraphe II.2-3) (2) Copolymère de méthacrylate de glycidyle et de méthacrylate de n-octyle (voir paragraphe 11.2-4) (3) Silice « Zeosil 1165 MP » de la société Rhodia (type HDS) (4) Tris(2-éthylhexyl)phosphate (5) TESPT (« Si69 » de la société Degussa) (6) « Dynasylan Octeo » de la société Degussa (7) N-cylohexyl-2-benzothiazol-sulfénamide (« Santocure CBS » de la société Flexsys) (8) Acide dodécanedioïque de la société Sigma Aldrich | | | |

**Tableau IV**

| Composition | C2 | C3 | C4 | Cr |
|---|---|---|---|---|
| µ laboratoire (20°C) | 80 | 80 | 140 | 100 |
| µlaboratoire (40°C) | 72 | 76 | 136 | 100 |

**Tableau V**

| | C5 | C6 |
|---|---|---|
| Elastomère E2 (1) | 40 | 40 |
| Elastomère E5 (2) | 60 | - |
| Elastomère E6 (3) | - | 60 |
| Silice (4) | 104 | 78 |
| Noir de carbone N234 | 5 | 4 |
| Plastifiant (5) | 34 | - |
| Antioxydant (6) | 2 | 2 |
| Cire anti-ozone | 1.5 | 1.5 |
| Silane (7) | 4.7 | 3.6 |
| Acide stéarique | 2 | 2 |
| DPG (8) | 1.5 | 1.4 |
| ZnO | 3 | 3 |
| Sulfénamide (9) | 1.5 | 1.5 |
| Soufre | 1.5 | 1.5 |
| Fraction volumique de charge renforçante | 25% | 25% |

| | | |
|---|---|---|
| (1) SBR avec 26% de motif styrène et 58% de motif 1,2 de la partie butadiénique, Tg -25°C (voir paragraphe 11.2-2) (2) Poly(méthacrylate de 2-éthylhexyle), de la société SP2 commercialisé en solution (voir paragraphe II.2-5) (3) Poly(méthacrylate de n-octyle), de la société SP2 commercialisé en solution (voir paragraphe II.2-5) (4) Silice « Zeosil 1165 MP » de la société Rhodia (type HDS) (5) Tris(2-éthylhexyl)phosphate (6) N-(1,3-diméthylbutyl)-N'-phényl-p-phénylènediamine, de la société Flexsys (7) TESPT (« Si69 » de la société Degussa) (8) Diphénylguanidine (« Perkacit » DPG de la société Flexsys) (9) N-cylohexyl-2-benzothiazol-sulfénamide (« Santocure CBS » de la société Flexsys) | | |

**Tableau VI**

| Composition | C5 | C6 | Cr |
|---|---|---|---|
| µ laboratoire (40°C) | 115 | 115 | 100 |

## Revendications

1. Composition de caoutchouc à base :
- d'une charge renforçante,
- d'un système de réticulation
- d'une matrice élastomère qui est réactive vis-à-vis du système de réticulation, laquelle matrice élastomère comprend un élastomère A comprenant des unités monomères d'un premier ester de l'acide méthacrylique qui représentent au moins 20% en mole des unités monomères de l'élastomère A,
à condition que si l'élastomère A est un polymère de plusieurs monomères, l'élastomère A est un copolymère statistique.

2. Composition de caoutchouc selon la revendication 1 dans laquelle le premier ester de l'acide méthacrylique répond à la formule (I)
CH₂=C(CH₃)-COO-Z (I)
où Z est une chaîne carbonée comportant au moins 2 atomes de carbone, éventuellement substituée et éventuellement interrompue par un ou plusieurs hétéroatomes.

3. Composition de caoutchouc selon la revendication 2 dans laquelle Z est une chaîne hydrocarbonée, de préférence un radical alkyle.

4. Composition de caoutchouc selon l'une quelconque des revendications 1 à 3 dans laquelle le premier ester de l'acide méthacrylique est différent d'un ester de l'acide méthacrylique comportant une ou plusieurs fonctions époxydes.

5. Composition de caoutchouc selon l'une quelconque des revendications 1 à 4 dans laquelle la matrice élastomère comporte des unités monomères réactives vis-à-vis du système de réticulation.

6. Composition de caoutchouc selon la revendication 5 dans laquelle la matrice élastomère comprend un deuxième élastomère, élastomère B, qui comprend des unités monomères réactives vis-à-vis du système de réticulation.

7. Composition de caoutchouc selon la revendication 6 dans laquelle l'élastomère B est un élastomère diénique, de préférence essentiellement insaturé choisi parmi les polybutadiènes, les polyisoprènes, les copolymères de butadiène, les copolymères d'isoprène et leurs mélanges.

8. Composition de caoutchouc selon l'une quelconque des revendications 6 à 7 dans laquelle les unités monomères du premier ester de l'acide méthacrylique présentes dans l'élastomère A représentent 100% en mole des unités monomères de l'élastomère A.

9. Composition de caoutchouc selon la revendication 8 dans laquelle l'élastomère A est un homopolymère du méthacrylate de 2-éthylhexyle, un homopolymère de méthacrylate de n-octyle, un homopolymère du méthacrylate d'isodécyle ou un homopolymère du méthacrylate de n-tridécyle.

10. Composition de caoutchouc selon la revendication 5 dans laquelle l'élastomère A comprend des unités monomères réactives vis-à-vis du système de réticulation.

11. Composition de caoutchouc selon la revendication 10 dans laquelle l'élastomère A comprend des unités monomères d'un deuxième monomère, lesquelles unités monomères du deuxième monomère sont réactives vis-à-vis du système de réticulation.

12. Composition de caoutchouc selon la revendication 11 dans laquelle les unités monomères du deuxième monomère contiennent au moins un groupe NH2, OH, imide, carbonate, époxy ou une double liaison carbone-carbone.

13. Composition de caoutchouc selon la revendication 12 dans laquelle le deuxième monomère de l'élastomère A est un 1,3-diène de préférence le 1,3-butadiène ou l'isoprène.

14. Composition de caoutchouc selon l'une quelconque des revendications 11 à 12 dans laquelle le deuxième monomère de l'élastomère A est un deuxième ester de l'acide méthacrylique, de préférence le méthacrylate de dicyclopentadiényloxyéthyle, le méthacrylate de glycidyle ou le méthacrylate de glycérol carbonate.

15. Composition de caoutchouc selon l'une quelconque des revendications 11 à 14 dans laquelle l'élastomère A est un copolymère du premier ester de l'acide méthacrylique et du deuxième monomère.

16. Composition de caoutchouc selon l'une quelconque des revendications 1 à 15 dans laquelle la charge renforçante comprend une charge inorganique, de préférence une silice.

17. Composition de caoutchouc selon l'une quelconque des revendications 1 à 16 dans laquelle la charge renforçante comprend un noir de carbone.

18. Produit semi-fini en caoutchouc comprenant une composition selon l'une quelconque des revendications précédentes.

19. Pneumatique qui comprend un produit semi-fini selon la revendication 18.

20. Procédé pour fabriquer la composition de caoutchouc selon l'une quelconque des revendications 1 à 17 qui comprend les étapes suivantes :
- malaxer thermomécaniquement la matrice élastomère, la charge renforçante, le cas échéant l'agent de couplage, le cas échéant le système plastifiant, et les autres additifs de la composition de caoutchouc à l'exception du système de réticulation, jusqu'à atteindre une température maximale comprise entre 110°C et 190°C ;
- refroidir l'ensemble à une température inférieure à 100°C ;
- incorporer ensuite le système de réticulation ;
- malaxer le tout jusqu'à une température maximale inférieure à 110°C pour obtenir une composition de caoutchouc.

21. Procédé pour fabriquer le pneumatique selon la revendication 19 qui comprend les étapes suivantes :
- malaxer thermomécaniquement la matrice élastomère, la charge renforçante, le cas échéant l'agent de couplage, le cas échéant le système plastifiant, et les autres additifs de la composition de caoutchouc à l'exception du système de réticulation, jusqu'à atteindre une température maximale comprise entre 110°C et 190°C ;
- refroidir l'ensemble à une température inférieure à 100°C ;
- incorporer ensuite le système de réticulation ;
- malaxer le tout jusqu'à une température maximale inférieure à 110°C pour obtenir une composition de caoutchouc,
- calandrer ou extruder la composition de caoutchouc.

## Patentansprüche

1. Kautschukzusammensetzung auf der Basis von:
- einer Verstärkungscharge,
- einem Vernetzungssystem,
- einer Elastomer-Matrix, die gegenüber einem Vernetzungssystem reaktiv ist, wobei die Elastomer-Matrix ein Elastomer A umfasst, umfassend Monomer-Einheiten eines ersten Esters von Methacrylsäure, die mindestens 20 Mol-% Monomer-Einheiten des Elastomers A darstellen,
mit der Maßgabe, dass, wenn das Elastomer A ein Polymer mehrerer Monomere ist, das Elastomer A ein statistisches Copolymer ist.

2. Kautschukzusammensetzung nach Anspruch 1, wobei der erste Ester von Methacrylsäure die Formel (I) aufweist:
CH₂=C(CH₃)-COO-Z (I),
wobei Z eine Kohlenstoffkette ist, umfassend mindestens 2 Kohlenstoffatome, gegebenenfalls substituiert und gegebenenfalls unterbrochen durch ein oder mehrere Heteroatome.

3. Kautschukzusammensetzung nach Anspruch 2, wobei Z eine Kohlenwasserstoffkette, vorzugsweise ein Alkylrest, ist.

4. Kautschukzusammensetzung nach einem der Ansprüche 1 bis 3, wobei der erste Ester von Methacrylsäure von einem Ester von Methacrylsäure, umfassend eine oder mehrere Epoxyd-Funktionen, verschieden ist.

5. Kautschukzusammensetzung nach einem der Ansprüche 1 bis 4, wobei die Elastomer-Matrix Monomer-Einheiten umfasst, die gegenüber dem Vernetzungssystem reaktiv sind.

6. Kautschukzusammensetzung nach Anspruch 5, wobei die Elastomer-Matrix ein zweites Elastomer, Elastomer B, umfasst, das Monomer-Einheiten umfasst, die gegenüber dem Vernetzungssystem reaktiv sind.

7. Kautschukzusammensetzung nach Anspruch 6, wobei das Elastomer B ein Dienelastomer ist, vorzugsweise im Wesentlichen ungesättigt, ausgewählt aus Polybutadienen, Polyisoprenen, Copolymeren von Butadien, Copolymeren von Isopren und ihren Mischungen.

8. Kautschukzusammensetzung nach einem der Ansprüche 6 bis 7, wobei die Monomer-Einheiten des ersten Esters von Methacrylsäure, die in dem Elastomer A vorhanden sind, 100 Mol-% der Monomer-Einheiten des Elastomers A darstellen.

9. Kautschukzusammensetzung nach Anspruch 8, wobei das Elastomer A ein Homopolymer von 2-Ethylhexylmethacrylat, ein Homopolymer von n-Octylmethacrylat, ein Homopolymer von Isodecylmethacrylat oder ein Homopolymer von n-Tridecylmethacrylat ist.

10. Kautschukzusammensetzung nach Anspruch 5, wobei das Elastomer A Monomer-Einheiten umfasst, die gegenüber dem Vernetzungssystem reaktiv sind.

11. Kautschukzusammensetzung nach Anspruch 10, wobei das Elastomer A Monomer-Einheiten eines zweiten Monomers umfasst, wobei die Monomer-Einheiten des zweiten Monomers gegenüber dem Vernetzungssystem reaktiv sind.

12. Kautschukzusammensetzung nach Anspruch 11, wobei die Monomer-Einheiten des zweiten Monomers mindestens eine Gruppe NH2, OH, Imid, Carbonat, Epoxy oder eine Doppelbindung Kohlenstoff-Kohlenstoff enthalten.

13. Kautschukzusammensetzung nach Anspruch 12, wobei das zweite Monomer des Elastomers A ein 1,3-Dien, vorzugsweise 1,3-Butadien oder Isopren, ist.

14. Kautschukzusammensetzung nach einem der Ansprüche 11 bis 12, wobei das zweite Monomer des Elastomers A ein zweiter Ester von Methacrylsäure ist, vorzugsweise Dicyclopentadienyloxyethylmethacrylat, Glycidylmethacrylat oder Glycerincarbonatmethacrylat.

15. Kautschukzusammensetzung nach einem der Ansprüche 11 bis 14, wobei das Elastomer A ein Copolymer des ersten Esters von Methacrylsäure und des zweiten Monomers ist.

16. Kautschukzusammensetzung nach einem der Ansprüche 1 bis 15, wobei die Verstärkungsscharge eine anorganische Charge, vorzugsweise ein Siliciumdioxid, umfasst.

17. Kautschukzusammensetzung nach einem der Ansprüche 1 bis 16, wobei die Verstärkungsscharge Ruß umfasst.

18. Halbfertiges Produkt aus Kautschuk, umfassend eine Zusammensetzung nach einem der vorhergehenden Ansprüche.

19. Reifen, welcher ein halbfertiges Produkt nach Anspruch 18 umfasst.

20. Verfahren zur Herstellung der Kautschukzusammensetzung nach einem der Ansprüche 1 bis 17, welches die folgenden Schritte umfasst:
- thermomechanisches Mischen der Elastomer-Matrix, der Verstärkungsscharge, gegebenenfalls des Kopplungsmittels, gegebenenfalls des Weichmachersystems und der anderen Additive der Kautschukzusammensetzung mit Ausnahme des Vernetzungssystems, bis eine maximale Temperatur zwischen 110 °C und 190 °C erreicht wird;
- Abkühlen des Ganzen auf eine Temperatur von weniger als 100 °C;
- anschließendes Einschließen des Vernetzungssystems;
- Mischen des Ganzen bis auf eine maximale Temperatur von weniger als 110 °C, um eine Kautschukzusammensetzung zu erhalten.

21. Verfahren zur Herstellung des Reifens nach Anspruch 19, welches die folgenden Schritte umfasst:
- thermomechanisches Mischen der Elastomer-Matrix, der Verstärkungsscharge, gegebenenfalls des Kopplungsmittels, gegebenenfalls des Weichmachersystems und der anderen Additive der Kautschukzusammensetzung mit Ausnahme des Vernetzungssystems, bis eine maximale Temperatur zwischen 110 °C und 190 °C erreicht wird;
- Abkühlen des Ganzen auf eine Temperatur von weniger als 100 °C;
- anschließendes Einschließen des Vernetzungssystems;
- Mischen des Ganzen bis auf eine maximale Temperatur von weniger als 110 °C, um eine Kautschukzusammensetzung zu erhalten;
- Kalandrieren oder Extrudieren der Kautschukzusammensetzung.

## Claims

1. Rubber composition based on:
- a reinforcing filler,
- a crosslinking system,
- an elastomer matrix that is reactive with respect to the crosslinking system, which elastomer matrix comprises an elastomer A comprising monomer units of a first methacrylic acid ester which represent at least 20 mol% of the monomer units of the elastomer A,
with the proviso that if the elastomer A is a polymer of several monomers, the elastomer A is a statistical copolymer.

2. Rubber composition according to Claim 1, in which the first methacrylic acid ester corresponds to the formula (I)
CH₂=C(CH₃)-COO-Z (I)
where Z is a carbon-based chain comprising at least 2 carbon atoms, optionally substituted and optionally interrupted by one or more heteroatoms.

3. Rubber composition according to Claim 2, in which Z is a hydrocarbon-based chain, preferably an alkyl radical.

4. Rubber composition according to any one of Claims 1 to 3, in which the first methacrylic acid ester is different from a methacrylic acid ester comprising one or more epoxide functions.

5. Rubber composition according to any one of Claims 1 to 4, in which the elastomer matrix comprises monomer units that are reactive with respect to the crosslinking system.

6. Rubber composition according to Claim 5, in which the elastomer matrix comprises a second elastomer, elastomer B, which comprises monomer units that are reactive with respect to the crosslinking system.

7. Rubber composition according to Claim 6, in which the elastomer B is a diene elastomer, preferably an essentially unsaturated diene elastomer selected from polybutadienes, polyisoprenes, butadiene copolymers, isoprene copolymers and mixtures thereof.

8. Rubber composition according to any one of Claims 6 to 7, in which the monomer units of the first methacrylic acid ester present in the elastomer A represent 100 mol% of the monomer units of the elastomer A.

9. Rubber composition according to Claim 8, in which the elastomer A is a homopolymer of 2-ethylhexyl methacrylate, a homopolymer of n-octyl methacrylate, a homopolymer of isodecyl methacrylate or a homopolymer of n-tridecyl methacrylate.

10. Rubber composition according to Claim 5, in which the elastomer A comprises monomer units that are reactive with respect to the crosslinking system.

11. Rubber composition according to Claim 10, in which the elastomer A comprises monomer units of a second monomer, which monomer units of the second monomer are reactive with respect to the crosslinking system.

12. Rubber composition according to Claim 11, in which the monomer units of the second monomer contain at least one NH₂, OH, imide, carbonate or epoxy group or a carbon-carbon double bond.

13. Rubber composition according to Claim 12, in which the second monomer of the elastomer A is a 1,3-diene, preferably 1,3-butadiene or isoprene.

14. Rubber composition according to either one of Claims 11 and 12, in which the the second monomer of the elastomer A is a second methacrylic acid ester, preferably dicyclopentadienyloxyethyl methacrylate, glycidyl methacrylate or glycerol carbonate methacrylate.

15. Rubber composition according to any one of Claims 11 to 14, in which the elastomer A is a copolymer of the first methacrylic acid ester and of the second monomer.

16. Rubber composition according to any one of Claims 1 to 15, in which the reinforcing filler comprises an inorganic filler, preferably a silica.

17. Rubber composition according to any one of Claims 1 to 16, in which the reinforcing filler comprises a carbon black.

18. Semi-finished product made of rubber comprising a composition according to any one of the preceding claims.

19. Tyre that comprises a semi-finished product according to Claim 18.

20. Process for manufacturing the rubber composition according to any one of Claims 1 to 17, which comprises the following steps:
- thermomechanically kneading the elastomer matrix, the reinforcing filler, where appropriate the coupling agent, where appropriate the plasticizing system, and the other additives of the rubber composition with the exception of the crosslinking system, until a maximum temperature of between 110°C and 190°C is reached;
- cooling the combined mixture to a temperature of less than 100°C;
- subsequently incorporating the crosslinking system;
- kneading everything up to a maximum temperature of less than 110°C, in order to obtain a rubber composition.

21. Process for manufacturing the tyre according to Claim 19, which comprises the following steps:
- thermomechanically kneading the elastomer matrix, the reinforcing filler, where appropriate the coupling agent, where appropriate the plasticizing system, and the other additives of the rubber composition with the exception of the crosslinking system, until a maximum temperature of between 110°C and 190°C is reached;
- cooling the combined mixture to a temperature of less than 100°C;
- subsequently incorporating the crosslinking system;
- kneading everything up to a maximum temperature of less than 110°C, in order to obtain a rubber composition,
- calendering or extruding the rubber composition.
